# EUROPEAN PATENT APPLICATION

(11) **EP 3 086 223 A1**
(43) Date of publication of application: **26.10.2016**
(21) Application number: 14878746.8
(22) Date of filing: 23.05.2014
(51) Int. Cl.: G06F 9/44

(54) **SUSPENDED INPUT METHOD, APPARATUS, AND COMPUTER STORAGE MEDIUM**

(30) Priority: 20.01.2014 CN 201410025962
(71) Applicant: ZTE Corporation, Shenzhen, Guangdong 518057 (CN)
(72) Inventor: FENG, Kai, Shenzhen Guangdong 518057 (CN)
(74) Representative: Awapatent AB
(86) International application number: PCT/CN2014/078331
(87) International publication number: WO 2015/106516

(57) **Abstract**

A method and apparatus for implementing a floating input, including: acquiring position information of an input box on a screen and resolution of the screen; and determining a default pop-up position of an input method panel on the screen according to the acquired position information and resolution. A user misoperation is avoided while the input box is not sheltered by the input method panel, thereby improving the user experience.

## Description

### Technical Field

The present invention relates to the field of mobile communications, and particularly, to a method and apparatus for implementing a floating input, and a computer storage medium.

### Background of the Related Art

A split screen function and a floating screen function on a large-screen and multi-core mobile terminals have become popular. More and more mobile terminal manufacturers begin to research and develop such new technology, thereby giving full play to the multitask processing ability of the large-screen multi-core mobile terminals. The split screen function has been implemented in the mobile terminals of ZTE, Samsung and Coolpad and so on at present. However, since the window of the screen is shrank after the screen is split on the mobile terminal, a pop-up input method panel occupies half of the screen when it is required to input characters. If an input box is just on the bottom half of the screen, the input box is sheltered by the input method panel, which brings inconvenience to the users, thereby leading to bad user experience.

The related method for solving the input method panel sheltering the input box includes: fixing the input method panel at one position, reducing the input method panel in a same proportion, and minimizing the sheltering. The problem of the input box being sheltered is not completely solved with the method, but after the input method panel is shrank, inconvenience is brought to the user input.

Or, the input method panel is permitted to float and may be dragged to a random position, but a default pop-up position would shelter the input box as well. With the method, though the problem of the input box being sheltered can be solved by the user manually dragging the input method panel, the user is required to participate, thus the user misoperation is easily caused, and the user experience is not so good.

### Summary of the Invention

In order to solve the above problem, the embodiments of the present invention provide a method and apparatus for implementing a floating input, and a computer storage medium, applied to a mobile terminal with the split screen function, which can avoid the user misoperation while the input box is not sheltered by the input method panel, thereby improving the user experience.

In order to achieve the above object, the embodiment of the present invention provides a method for implementing a floating input, which includes:
acquiring position information of an input box on a screen; and
determining a default pop-up position of an input method panel on the screen according to the acquired position information.

Preferably, determining a default pop-up position of an input method panel on the screen according to the acquired position information includes:
comparing the acquired position information and a preset value, and determining the default pop-up position of the input method panel on the screen according to a comparison result.

Preferably, the acquired position information is one or more of top-left corner coordinates, top-right corner coordinates, bottom-left corner coordinates and bottom-right corner coordinates of the input box.

Preferably, when it is determined that a mode of the screen is a vertical screen mode, a top-left corner or a top-right corner of the screen is taken as an origin of coordinates, and determining a default pop-up position of an input method panel on the screen according to the acquired position information includes:
determining that a vertical coordinate in the top-left corner coordinates or the top-right corner coordinates is greater than or equal to a half of a height of a resolution of the screen;
determining that the default pop-up position is on a top half of the screen.

Preferably, when it is determined that a vertical coordinate in the bottom-left corner coordinates or the bottom-right corner coordinates is less than or equal to a half of the height of the resolution ratio, the method further includes:
determining that the default pop-up position is on a bottom half of the screen.

Preferably, when it is determined that a mode of the screen is a horizontal screen mode, a bottom-left corner or a top-left corner of the screen is taken as an origin of coordinates, and determining a default pop-up position of an input method panel on the screen according to the acquired position information includes:
determining that a horizontal coordinate in the top-left corner coordinates or the bottom-left corner coordinates is greater than or equal to a half of a height of a resolution of the screen;
determining that the default pop-up position is on a right half of the screen.

Preferably, when it is determined that a horizontal coordinate in the top-right corner coordinates or the bottom-right corner coordinates is less than or equal to a half of the height of the resolution ratio, the method further includes:
determining that the default pop-up position is on a left half of the screen.

Preferably, the method further includes:
increasing a height of a window in which the input box is located, and reducing a height of another window according to a same size.

The embodiment of the present invention further provides an apparatus for implementing a floating input, which at least includes:
an acquisition module, configured to acquire position information of an input box on a screen; and
a determination module, configured to determine a default pop-up position of an input method panel on the screen according to the acquired position information.

Preferably, the determination module is further configured to,
compare the acquired position information and a preset value, and determine the default pop-up position of the input method panel on the screen according to a comparison result.

Preferably, the acquired position information is one or more of top-left corner coordinates, top-right corner coordinates, bottom-left corner coordinates and bottom-right corner coordinates of the input box.

Preferably, the apparatus further includes:
a judgment module, configured to determine that a mode of the screen is a vertical screen mode;
the determination module is configured to,
determine that a vertical coordinate in the top-left corner coordinates or the top-right corner coordinates is greater than or equal to a half of a height of a resolution of the screen; and determine that the default pop-up position is on a top half of the screen.

Preferably, the determination module is further configured to,
determine that a vertical coordinate in the bottom-left corner coordinates or the bottom-right corner coordinates is less than or equal to a half of the height of the resolution, and determine that the default pop-up position is on a bottom half of the screen.

Preferably, the apparatus further includes:
a judgment module, configured to determine that a mode of the screen is a horizontal screen mode;
the determination module is configured to,
determine that a horizontal coordinate in the top-left corner coordinates or the bottom-left corner coordinates is greater than or equal to a half of a height of the resolution of the screen; and determine that the default pop-up position is on a right half of the screen.

Preferably, the determination module is further configured to,
determine that a horizontal coordinate in the top-right corner coordinates or the bottom-right corner coordinates is less than or equal to a half of the height of the resolution, and determine that the default pop-up position is on a left half of the screen.

Preferably, the apparatus further includes:
an adjustment module, configured to increase a height of a window in which the input box is located, and reduce a height of another window according to a same size.

The embodiment of the present invention further provides a computer storage medium, computer executable instructions are stored in the computer storage medium, and the computer executable instructions are set to execute any method for implementing a floating input mentioned above.

Compared with the related art, the embodiment of the present invention includes: acquiring position information of an input box on a screen and resolution of the screen; and determining a default pop-up position of an input method panel on the screen according to the acquired position information and resolution. Through the scheme of the embodiments of the present invention, the user misoperation is avoided while the input box is not sheltered by the input method panel, thereby improving the user experience.

### Brief Description of Drawings

The accompanying drawings in the embodiments of the present invention will be described below, the accompanying drawings in the embodiments are used to provide a further understanding of the embodiments of the present invention, and explain the embodiments of the present invention together with the specifications, but do not constitute a limitation on the protection scope of the embodiments of the present invention.
FIG. 1 is a flow chart of a method for implementing a floating input according to the embodiment of the present invention;
FIG. 2 is a schematic diagram of an embodiment of an input method panel popping up on the bottom half of the screen in a vertical screen mode according to the embodiment of the present invention;
FIG. 3 is a schematic diagram of an embodiment of adjusting the height of two half screens in the vertical screen mode according to the embodiment of the present invention;
FIG. 4 (a) is a schematic diagram of an embodiment of an input method panel popping up on the left half of the screen in a horizontal screen mode according to the embodiment of the present invention;
FIG. 4 (b) is a schematic diagram of an embodiment of an input method panel popping up on the right half of the screen in a horizontal screen mode according to the embodiment of the present invention;
FIG. 5 is a schematic diagram of structural composition of an apparatus for implementing a floating input according to the embodiment of the present invention;

In the figures, 1 represents a first application program, 2 represents an input box, 3 represents an input method panel, and 4 presents a second application program.

### Preferred Embodiments of the Invention

The present invention will be further described in combination with the accompanying drawings below, which cannot be used to limit the protection scope of the embodiments of the present invention.

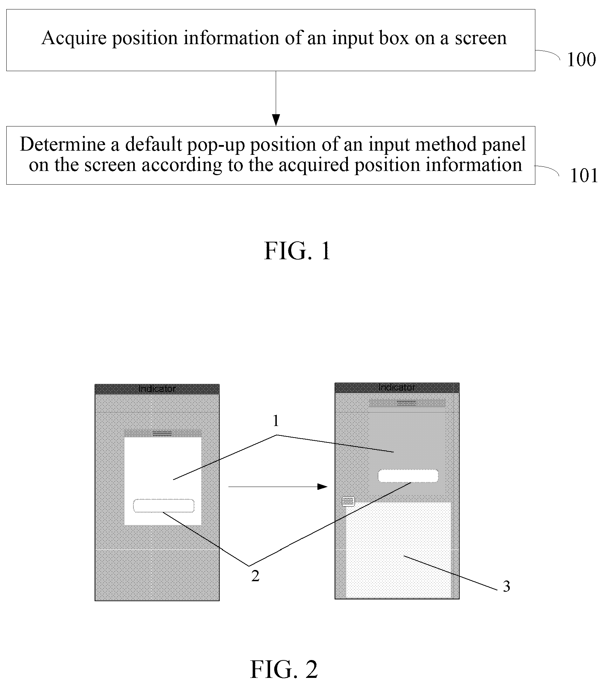

With reference to FIG. 1, the embodiment of the present invention provides a method for implementing a floating input, applied to a mobile terminal with a split screen function, and the method includes:
in step 100, position information of an input box on a screen is acquired.

In this step, the technology of how to acquire the position information of the input box on the screen belongs to the related art, which cannot be used to limit the protection scope of the embodiments of the present invention.

In this step, the position information may be one or more of coordinates of four vertexes of the input box (respectively: coordinates of the top-left corner, coordinates of the top-right corner, coordinates of the bottom-left corner and coordinates of the bottom-right corner), and coordinates of a central point also may be acquired through the coordinates of the four vertexes.

In this step, the coordinates include a horizontal coordinate and a vertical coordinate.

Herein, the horizontal coordinate and vertical coordinate are changed with a mode of the screen and an origin of coordinates. The origin of coordinates is determined according to practical situations. A fixed point on the screen may be taken as the origin, and the origin also may be changed with the mode of the screen.

Corresponding to one point on the screen, when the mode of the screen is a horizontal screen mode, the top-left corner may be taken as the origin of coordinates, the coordinates of the point may be represented as (m, n). That is, m is the horizontal coordinate and n is the vertical coordinate. When the mode of the screen is a vertical screen mode, the bottom-left corner may be taken as the origin of coordinates, the coordinates of the point may be represented as (n, m). That is, n is the horizontal coordinate and m is the vertical coordinate.

In step 101, a default pop-up position of an input method panel on the screen is determined according to the acquired position information.

In this step, the acquired position information may be compared with a preset value. According to a comparison result, the default pop-up position of the input method panel on the screen can be determined.

Herein, the preset value may be determined according to a size of the screen. If the input method panel occupies a half of the screen, the preset value may be a half of the height of a resolution of the screen; and if the input method panel occupies one third of the screen, the preset value may be one third of the height of the resolution, and so on.

The height of the resolution is the number of pixels of a long side of the screen, and the width is the number of pixels of a short side, and they are not changed with the mode of the screen. The technology of how to acquire the resolution of the screen belongs to the related art, which cannot be used to limit the protection scope of the embodiments of the present invention.

For example, the preset value of the height of the resolution may be a half of the height of the resolution. When judging that the mode of the screen is the vertical screen mode, the top-left corner or top-right corner of the screen is taken as the origin of coordinates, and if judging that the vertical coordinate in the top-left corner coordinates or the top-right corner coordinates of the input box is greater than or equal to a half of the height the resolution, it is to determine that the default pop-up position is on the top half of the screen.

Herein, the coordinates of the top-left corner of the input method panel on the screen may be represented as (W-a, H-b). Herein, H represents the height of the resolution of the screen, W represents the width of the resolution of the screen, b represents the height of a rectangle area of the input method panel, and a represents the width of the rectangle area of the input method panel.

If it is judged that the vertical coordinate in the bottom-left corner coordinates or the bottom-right corner coordinates is less than or equal to a half of the height of the resolution, the default pop-up position is determined to locate on the bottom half of the screen.

Herein, the coordinates of the top-left corner of the input method panel on the screen may be represented as (W-a, H/2-b).

If it is judged that the vertical coordinate in the top-left corner coordinates or the top-right corner coordinates is less than a half of the height of the resolution, and the vertical coordinate in the bottom-left corner coordinates or the bottom-right corner coordinates is greater than a half of the height of the resolution, the default pop-up position is determined to locate on the top half or bottom half of the screen.

As shown in FIG. 2, the input box is on the top half of the screen. After the input box is clicked, it is judged that the acquired default pop-up position of the input method panel should be on the bottom half of the screen.

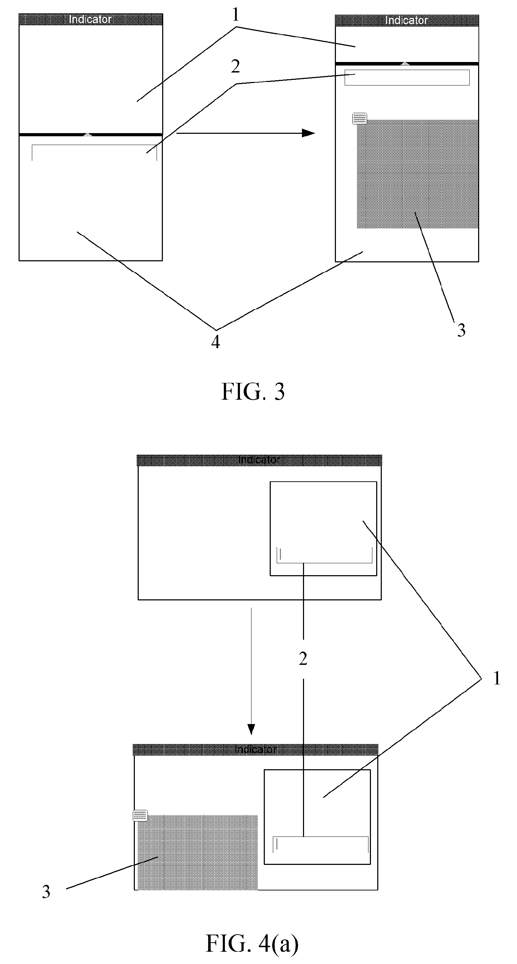

In this step, as shown in FIG. 3, when it is judged that the mode of the screen is the vertical screen mode, the height of a window in which the input box is located may further be increased, and the height of another window is shrank according to the same size. Here it is considered that the split screen function of the mobile terminal divides the screen into two windows, including a window on the top half the screen and a window on the bottom half of the screen respectively.

For example, the height of the window in which the input box is located may be increased to H/2+a, and the height of another window is shrank to H/2-a. Thus the coordinates of the top-left corner of the input method panel on the screen may be (0, H/2).

In this step, when the mode of the screen is determined to be the horizontal screen mode, the bottom-left corner or top-left corner of the screen may be taken as the origin of coordinates.As shown in FIG. 4(a), if it is judged that the horizontal coordinate in the top-left corner coordinates or the bottom-left corner coordinates is greater than or equal to a half of the height the resolution, it is to determine that the default pop-up position is on the left half of the screen.

Herein, the coordinates of the top-left corner of the input method panel on the screen may be (H/2-b, W-a).

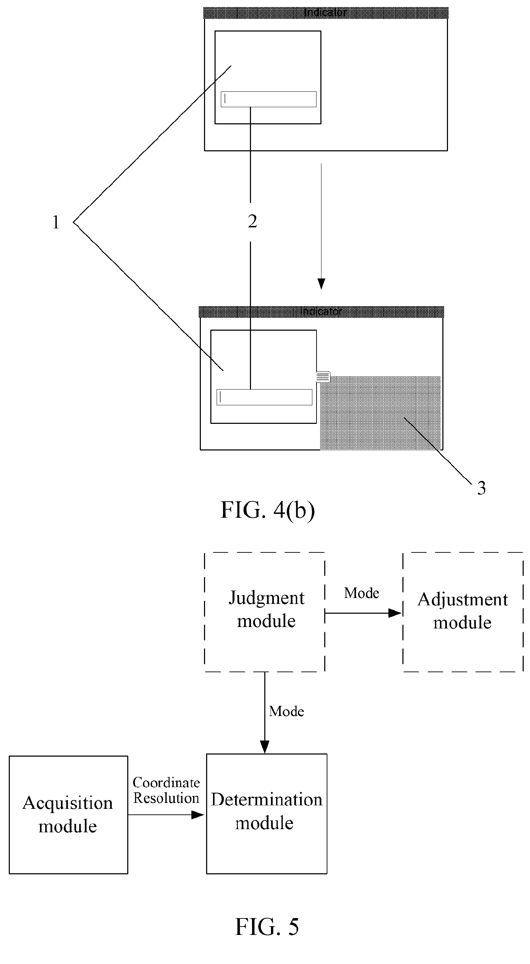

As shown in FIG. 4(b), if it is judged that the horizontal coordinate in the top-right corner coordinates or the bottom-right corner coordinates is less than or equal to a half of the height the resolution, it is to determine that the default pop-up position is on the right half of the screen.

Herein, the coordinates of the top-left corner of the input method panel on the screen may be (H-b, W-a).

If it is judged that the horizontal coordinate in the top-left corner coordinates or the bottom-left corner coordinates is less than a half of the height of the resolution, and the horizontal coordinate in the top-right corner coordinates or the bottom-right corner coordinates is greater than a half of the height of the resolution, it is to determine that the default pop-up position is on the left half or right half of the screen.

Herein, the technology of judging the mode of the screen belongs to the related art, which cannot be used to limit the protection scope of the embodiments of the present invention. For example, the mode of the screen can be judged by using a gravity sensor, when the vertical coordinate output by the gravity sensor is -5, it is judged as the vertical screen mode; and when the horizontal coordinate output by the gravity sensor is -5, it is judged as the horizontal screen mode.

With reference to FIG. 5, the embodiment of the present invention also provides an apparatus for implementing a floating input, which at least includes:
an acquisition module, configured to acquire position information of an input box on a screen and a resolution of the screen; and
a determination module, configured to determine a default pop-up position of an input method panel on the screen according to the acquired position information and resolution.

In the apparatus of the embodiment of the present invention, the acquired position information is one or more of top-left corner coordinates, top-right corner coordinates, bottom-left corner coordinates and bottom-right corner coordinates of the input box.

The apparatus of the embodiment of the present invention further includes:
a judgment module, configured to judge that a mode of the screen is a vertical screen mode;
the determination module is configured to,
judge that a vertical coordinate in the top-left corner coordinates or the top-right corner coordinates is greater than or equal to a half of the height of the resolution; and determine that the default pop-up position is on the top half of the screen.

In the apparatus of the embodiment of the present invention, the determination module is further configured to,
judge that a vertical coordinate in the bottom-left corner coordinates or the bottom-right corner coordinates is less than or equal to a half of the height of the resolution, determine that the default pop-up position is on the bottom half of the screen.

In the apparatus of the embodiment of the present invention, the determination module is further configured to,
judge that the vertical coordinate in the top-left corner coordinates or the top-right corner coordinates is less than a half of the height of the resolution, and the vertical coordinate in the bottom-left corner coordinates or the bottom-right corner coordinates is greater than a half of the height of the resolution, determine that the default pop-up position is on the top half or bottom half of the screen.

The apparatus of the embodiment of the present invention further includes:
a judgment module, configured to judge that a mode of the screen is a horizontal screen mode;
the determination module is configured to,
judge that a horizontal coordinate in the top-left corner coordinates or the bottom-left corner coordinates is greater than or equal to a half of the height of the resolution; and determine that the default pop-up position is on the right half of the screen.

In the apparatus of the embodiment of the present invention, the determination module is further configured to,
judge that a horizontal coordinate in the top-right corner coordinates or the bottom-right corner coordinates is less than or equal to a half of the height of the resolution, and determine that the default pop-up position is on the left half of the screen.

In the apparatus of the embodiment of the present invention, the determination module is further configured to,
judge that the horizontal coordinate in the top-left corner coordinates or the bottom-left corner coordinates is less than a half of the height of the resolution, and the horizontal coordinate in the top-right corner coordinates or the bottom-right corner coordinates is greater than a half of the height of the resolution, determine that the default pop-up position is on the left half or right half of the screen.

The apparatus of the embodiment of the present invention further includes:
an adjustment module, configured to increase a height of a window in which the input box is located, and reduce a height of another window according to the same size.

The embodiment of the present invention further provides a computer storage medium, computer executable instructions are stored in the computer storage medium, and the computer executable instructions are set to execute any method for implementing a floating input mentioned above.

In the embodiments of the present invention, the user misoperation is avoided while the input box is not sheltered by the input method panel, thereby improving the user experience.

The above embodiments are only for the people skilled in the art to have an easier understanding, which is not used to limit the protection scope of the embodiments of the present invention, and in the premise of not departing from the inventive concept of the embodiments of the present invention, all apparent substitutions and improvements of the embodiments of the present invention made by the people skilled in the art are within the protection scope of the embodiments of the present invention.

### Industrial Applicability

Compared with the related art, the embodiment of the present invention includes: acquiring position information of an input box on a screen and a resolution of the screen; and determining a default pop-up position of an input method panel on the screen according to the acquired position information and resolution. Through the scheme of the embodiments of the present invention, the user misoperation is avoided while the input box is not sheltered by the input method panel, thereby improving the user experience.

## Claims

1. A method for implementing a floating input, comprising:
acquiring position information of an input box on a screen; and
determining a default pop-up position of an input method panel on the screen according to the acquired position information.

2. The method according to claim 1, wherein, determining a default pop-up position of an input method panel on the screen according to the acquired position information comprises:
comparing the acquired position information and a preset value, and determining the default pop-up position of the input method panel on the screen according to a comparison result.

3. The method according to claim 1, wherein, the acquired position information is one or more of top-left corner coordinates, top-right corner coordinates, bottom-left corner coordinates and bottom-right corner coordinates of the input box.

4. The method according to claim 3, wherein, when that a mode of the screen is a vertical screen mode is determined, a top-left corner or a top-right corner of the screen is taken as an origin of coordinates, and determining a default pop-up position of an input method panel on the screen according to the acquired position information comprises:
determining that a vertical coordinate in the top-left corner coordinates or the top-right corner coordinates is greater than or equal to a half of a height of a resolution of the screen;
determining that the default pop-up position is on a top half of the screen.

5. The method according to claim 4, wherein, when that a vertical coordinate in the bottom-left corner coordinates or the bottom-right corner coordinates is less than or equal to a half of height of the resolution is determined, the method further comprises:
determining that the default pop-up position is on a bottom half of the screen.

6. The method according to claim 3, wherein, when that a mode of the screen is a horizontal screen mode is determined, a bottom-left corner or a top-left corner of the screen is taken as an origin of coordinates, and determining a default pop-up position of an input method panel on the screen according to the acquired position information comprises:
determining that a horizontal coordinate in the top-left corner coordinates or the bottom-left corner coordinates is greater than or equal to a half of a height of a resolution of the screen;
determining that the default pop-up position is on a right half of the screen.

7. The method according to claim 6, wherein, when that a horizontal coordinate in the top-right corner coordinates or the bottom-right corner coordinates is less than or equal to a half of the height of the resolution is determined, the method further comprises:
determining that the default pop-up position is on a left half of the screen.

8. The method according to claim 4 or 5, further comprising:
increasing a height of a window in which the input box is located, and reducing a height of another window according to a same size.

9. An apparatus for implementing a floating input, at least comprising:
an acquisition module, configured to acquire position information of an input box on a screen; and
a determination module, configured to determine a default pop-up position of an input method panel on the screen according to the acquired position information.

10. The apparatus according to claim 9, wherein, the determination module is configured to:
compare the acquired position information and a preset value, and determine the default pop-up position of the input method panel on the screen according to a comparison result.

11. The apparatus according to claim 9, wherein, the acquired position information is one or more of top-left corner coordinates, top-right corner coordinates, bottom-left corner coordinates and bottom-right corner coordinates of the input box.

12. The apparatus according to claim 11, further comprising:
a judgment module, configured to determine that a mode of the screen is a vertical screen mode;
the determination module being configured to,
determine that a vertical coordinate in the top-left corner coordinates or the top-right corner coordinates is greater than or equal to a half of a height of a resolution of the screen, and determine that the default pop-up position is on a top half of the screen.

13. The apparatus according to claim 12, wherein, the determination module is further configured to,
determine that a vertical coordinate in the bottom-left corner coordinates or the bottom-right corner coordinates is less than or equal to a half of the height of the resolution, and determine that the default pop-up position is on a bottom half of the screen.

14. The apparatus according to claim 11, further comprising:
a judgment module, configured to determine that a mode of the screen is a horizontal screen mode;
the determination module being configured to,
determine that a horizontal coordinate in the top-left corner coordinates or the bottom-left corner coordinates is greater than or equal to a half of a height of the resolution of the screen; and determine that the default pop-up position is on a right half of the screen.

15. The apparatus according to claim 14, wherein, the determination module is further configured to,
determine that a horizontal coordinate in the top-right corner coordinates or the bottom-right corner coordinates is less than or equal to a half of the height of the resolution, and determine that the default pop-up position is on a left half of the screen.

16. The apparatus according to claim 12 or 13, further comprising:
an adjustment module, configured to, increase a height of a window in which the input box is located, and reduce a height of another window according to a same size.

17. A computer storage medium, wherein, computer executable instructions are stored in the computer storage medium, and the computer executable instructions are set to execute the method for implementing a floating input according to claims 1 to 8.
